Europäisches Patentamt

**European Patent Office**

**Office européen des brevets**

(19)

(11) Numéro de publication : **0 208 627**
**B1**

(12)

# FASCICULE DE BREVET EUROPÉEN

(45) Date de publication du fascicule du brevet :
**11.01.89**

(21) Numéro de dépôt : **86420149.6**

(22) Date de dépôt : **05.06.86**

(51) Int. Cl.⁴ : **B 05 D  1/26**

(54) **Procédé pour l'obtention d'un article textile enduit.**

(30) Priorité : **13.06.85 FR 8509185**

(43) Date de publication de la demande :
**14.01.87 Bulletin 87/03**

(45) Mention de la délivrance du brevet :
**11.01.89 Bulletin 89/02**

(84) Etats contractants désignés :
**AT BE DE GB IT**

(56) Documents cités :
**GB—A—  982 758**
**GB—A— 1 098 381**
**US—A— 3 470 055**

(73) Titulaire : **TEXTILES ET PLASTIQUES CHOMARAT**
**(Société anonyme)**
**F-07160 Le Cheylard (FR)**

(72) Inventeur : **Chomarat, Bernard**
**15 avenue de Jagornac**
**F-07160 Le Cheylard (FR)**

(74) Mandataire : **Laurent, Michel et al**
**Cabinet LAURENT et GUERRE B.P. 32**
**F-69131 Ecully Cedex (FR)**

EP 0 208 627 B1

Jouve, 18, rue St-Denis, 75001 Paris, France

## Description

L'invention concerne un procédé pour l'obtention d'un article textile enduit selon le préambule de la revendication 1.

Depuis longtemps, il a été proposé de réaliser des articles textiles enduits, notamment des tricots dont une des faces est associée à une couche de chlorure de polyvinyle (PVC) ou similaire. De tels articles sont notamment utilisés comme substituts du cuir dans le domaine de l'ameublement, pour le revêtement de sièges de véhicules, la bagagerie...

Parmi les nombreux procédés connus à ce jour pour réaliser de telles enductions, l'un consiste à associer par calandrage un film de PVC au support textile. Dans le cas où le support textile est déformable, par exemple constitué par un tricot ou tissu léger décontexturé, se pose le problème de la stabilité après enduction.

Par ailleurs, tant d'un point de vue esthétique que d'un point de vue fonctionnel, de tels articles doivent en général subir un traitement superficiel afin de grainer leur surface.

Or on a trouvé, et c'est ce qui fait l'objet de la présente invention, un procédé qui, en une seule opération, non seulement permet d'améliorer les caractéristiques mécaniques de tels articles enduits (tricots par exemple), notamment d'améliorer leur stabilité dimensionnelle, mais qui, par ailleurs, permet d'obtenir directement, sans traitement particulier, un aspect de surface grainé.

D'une manière générale, le procédé conforme à l'invention consiste, de manière connue, notamment selon l'US-A-3 470 055, à associer par calandrage, un support textile (tricot, tissu) et un film de matière thermoplastique (PVC notamment), la calandre utilisée comportant un cylindre en métal (lisse ou grainé) et un contre-cylindre revêtu d'une couche de caoutchouc siliconé, l'article textile (tricot ou tissu) étant amené de manière à être en contact avec le contre-rouleau revêtu de caoutchouc alors que le film est, quant à lui, en contact avec le rouleau métallique lors de l'association et il se caractérise en ce qu'on intercale, entre le film et l'article textile, une grille textile lors de l'opération de calandrage de façon à obtenir un article présentant sur sa face enduite, un aspect grainé, correspondant à la fois à la structure de la grille et, à l'intérieur des jours que comporte cette grille, un grain correspondant à l'état de surface du support.

Par ailleurs, pour la bonne mise en œuvre du procédé selon l'invention, l'association des différentes couches entre elles est réalisée, de préférence, immédiatement en aval de la tête d'extrusion du film de PVC, la distance entre la sortie de cette tête d'extrusion et la ligne de contact entre les cylindres de la calandre étant très faible, de l'ordre de quelques centimètres, de manière à ce que le refroidissement du film formé soit faible. Grâce à un tel procédé, on obtient un tricot, tissu enduit qui non seulement présente une grande stabilité, résultat qui découle de manière évidente de l'utilisation d'une grille textile de renfort mais également, et ce de manière surprenante, qu'il était possible, même avec une calandre dont le cylindre métallique est lisse, d'obtenir un matériau qui présente sur sa face enduite un aspect légèrement grainé, régulier, correspondant à la fois à la structure de la grille et, à l'intérieur des jours que comporte cette grille, un grain correspondant à l'état de surface du support du film (tricot, tissu). Bien évidemment, le grain est accentué si l'on utilise un rouleau métallique grainé.

Pour la mise en œuvre d'un tel procédé, on peut utiliser tout type de tricot ou tissu à base de tout type de fils (d'origine naturelle ou chimique) et, comme films destinés à former la couche d'enduction, on peut, outre les films à base de PVC, utiliser tout autre type de films susceptibles d'adhérer au support textile, par exemple des films à base de polyuréthane, de polyéthylène, de polypropylène, acétate de celluloses...

Par ailleurs, de tels films peuvent être soit teintés dans la masse soit, au contraire, être transparents.

Enfin, il convient de noter que dans l'article enduit terminé, une face conserve son aspect et son toucher textile, l'enduit ne pénétrant que partiellement dans l'épaisseur du support textile. En conséquence, en fonction des utilisations, un tel article peut être utilisé en ayant comme face endroit soit la face à caractéristiques textiles soit au contraire, celle qui est enduite.

L'invention et les avantages qu'elle apporte seront cependant mieux compris grâce à l'exemple de réalisation suivant donné ci-après à titre indicatif mais non limitatif et qui est illustré par les schémas annexés dans lesquels :

- la figure 1 est une vue schématique de côté, d'une installation permettant la mise en œuvre du procédé selon l'invention ;

- la figure 2 est une vue schématique en perspective éclatée d'un article enduit obtenu par la mise en œuvre de ce procédé.

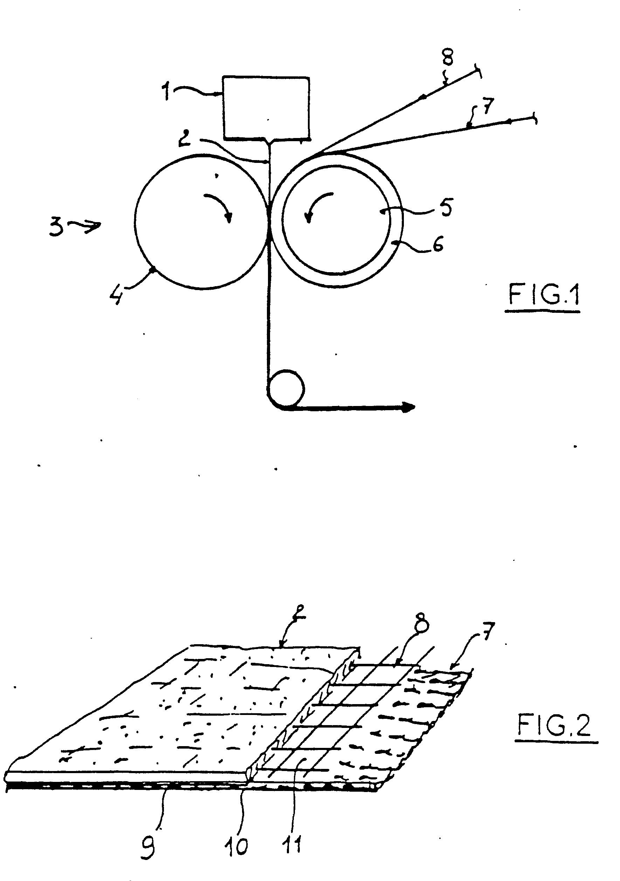

La figure 1 illustre une installation permettant la mise en œuvre du procédé selon l'invention.

Si l'on se reporte à cette figure, une telle installation comporte une extrudeuse (1), conventionnelle, permettant de produire le film (2), par exemple en PVC. A la sortie de cette extrudeuse et le plus près possible de celle-ci, est disposée une calandre (3) comportant un cylindre (4) en métal (lisse ou grainé), et un contre-cylindre (5) recouvert d'un revêtement en caoutchouc (6), lui-même siliconé.

La vitesse des cylindres de la calandre (3) est réglée de manière à produire un étirage du film produit entre la sortie de l'extrudeuse (1) et la ligne de pincement dudit film entre les cylindres. En général, le taux d'étirage est voisin de deux.

Selon l'invention, lors de l'association du film (2) et du support textile (7), (tricot ou tissu), on intercale entre ces deux éléments une grille textile (8). Ainsi que cela ressort de la figure 1, le film (2) se trouve en contact avec le rouleau en métal (4) (lisse ou grainé), alors que la matière textile (7) est, quant à elle, en contact avec le contre-rouleau caoutchouté (5).

Après passage dans la calandre, le complexe formé a une structure telle qu'illustrée à la figure 2, la grille textile (8) étant parfaitement maintenue entre la couche d'enduction (2) et le support textile (7). Le film (2) formant l'enduit superficiel pénètre seulement sur une partie (9) de l'épaisseur du support (7), de telle sorte que sa face (10) conserve toutes ses caractéristiques textiles.

En revanche, la face enduite (2) présente un aspect légèrement grainé si le rouleau métallique est lisse, cet aspect correspondant à la combinaison des effets fournis par la structure grille (8) et à l'état de surface du support (7) dans les zones (11) comprises entre les jours de la grille (8).

Exemple 1

De la manière énoncée précédemment, on réalise un complexe comportant :

- comme support textile (7), un tricot à mailles cueillies, réalisé sur métier circulaire double fonture, jauge 14, l'armure étant une armure relief obtenue par charges. Le fil utilisé est un fil polyester FTF de 167 dtex. A la tombée du métier, un tel tricot pèse 200 g/m² et est, de par nature, déformable dans toutes les directions.

On associe, conformément à l'invention à ce tricot (7) une grille textile (8) constituée par la superposition de fils de chaîne et de trame collés entre eux, ces fils étant des fils de verre ayant un titre de 51 tex et définissant entre eux des jours de cinq millimètres de côté. Le film (2) extrudé est un film de PVC qui, en sortie de l'extrudeuse (1), a une épaisseur de 0,5 mm et subit un étirage à un taux de 2 par suite de la vitesse de l'appel des cylindres (4, 5) de la calandre (3). La distance entre la sortie de l'extrudeuse (1) et la zone de jonction des trois constituants est de l'ordre de 5 cm. Par suite, la liaison entre les différentes couches est réalisée alors que le film (2) a encore une température de l'ordre de 170 °C.

En procédant d'une telle manière, on obtient un tricot enduit, dont une face (10) a un toucher et un aspect parfaitement textiles, ce tricot enduit étant parfaitement stable tant longitudinalement que transversalement et, présentant, par ailleurs, sur sa face enduite (2), un aspect légèrement grainé reproduisant la structure de la grille (8) et de l'état de surface du tricot (7) compris entre les fils formant ladite grille (8).

Un tel article peut être utilisé avec succès pour la bagagerie, l'ameublement...

Exemple 2

On répète l'exemple 1 mais on substitue au tricot un tissu (7) réalisé selon une armure taffetas comportant 14 fils et 14 coups par centimètre.

Comme chaîne, on utilise des fils polyester FTF de 167 dtex tordus à 130 tours/mètre.

Comme trame, on utilise également des fils de polyester FTF de 160 dtex mais non tordus.

A la tombée du métier, un tel tissu pèse 60 g/m² et est déformable.

Après association avec un film (2) conformément à l'invention, on obtient un article enduit dont une face (10) a un toucher, et un aspect parfaitement textiles correspondant au tissu et qui est parfaitement stable tant longitudinalement que transversalement.

Un tel article peut être utilisé dans l'ameublement ou toute autre application.

Ainsi, on ne sort pas du cadre de l'invention en remplaçant la grille textile non tissée par un article équivalent, par exemple par une grille tissée. Par ailleurs, le tissu ou tricot peut éventuellement être teint ou imprimé.

**Revendications**

1. Procédé pour l'obtention d'un article textile enduit qui consiste à associer, par calandrage, un support textile (7) (tricot ou tissu) et un film (2) de matière thermoplastique, la calandre utilisée comportant un cylindre (4) en métal (lisse ou grainé) et un contre-cylindre (5) revêtu d'une couche de caoutchouc siliconé, le support (7) étant en contact avec le contre-rouleau (5) alors que le film (2) est en contact avec le rouleau métallique (4) lors de l'association, caractérisé en ce qu'on intercale entre le film (2) et le support textile (7) une grille textile lors de l'opération de calandrage, de façon à obtenir un article présentant sur sa face enduite, un aspect grainé, correspondant à la fois à la structure de la grille (8) et, à l'intérieur des jours que comporte cette grille, un grain correspondant à l'état de surface du support (7).

2. Procédé selon la revendication 1, caractérisé par le fait que l'association des différentes couches (2, 7, 8) entre elles est réalisée immédiatement en aval de la tête d'extrusion (1) d'un film, PVC par exemple, la distance entre la sortie de cette tête d'extrusion (1) et la ligne de contact entre les cylindres de la calandre (3) étant faible, de l'ordre de quelques centimètres.

3. Procédé selon l'une des revendications 1 et 2, caractérisé par le fait que le film (2) formant la couche d'enduction est un film transparent.

4. Procédé selon l'une des revendications 1 et 2, caractérisé par le fait que le film (2) formant la couche d'enduction est un film teinté dans la masse.

5. Procédé selon l'une des revendications 1 à 4, caractérisé par le fait que la face envers du support (7) conserve son aspect et son toucher textiles, l'enduit (2) ne pénétrant que partiellement dans l'épaisseur dudit support (7).

6. Procédé selon l'une quelconque des revendications 2 à 5, caractérisé par le fait que le support (7) est un tricot.

7. Procédé selon l'une des revendications 2 à 5, caractérisé par le fait que le support (7) est un tissu.

**Claims**

1. Method of making a coated textile article which involves joining by calendering a textile support (7) (knitted or woven fabric) and a thermoplastic film (2), the calender used comprising a (smooth or grained) metal roller (4) and a back-up roller (5) covered with a layer of silicone rubber, the support (7) being in contact with the back-up roller (5), whilst the film (2) is in contact with the metal roller (4) during the joining operation, characterized in that a textile mesh is inserted between the film (2) and the textile support (7) during the calendering operation, so as to obtain an article having, on its coated face, a grained appearance corresponding to the structure of the mesh (8) and, within the apertures of this mesh, a grain corresponding to the surface state of the support (7).

2. Method according to Claim 1, characterized in that the various layers (2, 7, 8) are joined to one another immediately downstream of the head (1) for the extrusion of a film, for example PVC, the distance between the outlet of this extrusion head (1) and the line of contact between the rollers of the calender (3) being small and of the order of a few centimetres.

3. Method according to one of Claims 1 and 2, characterized in that the film (2) forming the coating layer is a transparent film.

4. Method according to one of Claims 1 and 2, characterized in that the film (2) forming the coating layer is a film dyed in the mass.

5. Process according to one of Claims 1 to 4, characterized in that the back face of the support (7) preserves its textile appearance and feel, the coating (2) penetrating only partially into the thickness of the said support (7).

6. Process according to any one of Claims 2 to 5, characterized in that the support (7) is a knitted fabric.

7. Process according to one of Claims 2 to 5, characterized in that the support (7) is a woven fabric.

**Patentansprüche**

1. Verfahren zur Herstellung eines beschichteten Textilartikels, wobei ein textiles Trägermaterial (7) (gestrickt oder gewoben) und eine Folie (2) aus thermoplastischem Material durch Kalandrieren verbunden werden, wobei der verwendete Kalander eine Walze (4) aus Metall (glatt oder genarbt) und eine Gegenwalze (5), die mit einer Schicht an Silikonkautschuk überzogen ist, aufweist, wobei beim Verbinden das Trägermaterial (7) mit der Gegenwalze (5), die Folie (2) dagegen mit der metallischen Walze (4) in Kontakt steht, dadurch gekennzeichnet, daß während des Kalandriervorganges ein textiles Gitternetz derart zwischen die Folie (2) und das textile Trägermaterial (7) gebracht wird, daß ein Artikel erhalten wird, der auf seiner beschichteten Seite ein genarbtes Aussehen aufweist, das der Struktur des Gitternetzes (8) entspricht und zugleich, im Innenbereich der Öffnungen des Gitternetzes eine Narbung aufweist, die der Oberflächenbeschaffenheit des Trägermaterials (7) entspricht.

2. Verfahren nach Anspruch 1, dadurch gekennzeichnet, daß das Verbinden der verschiedenen Schichten (2, 7, 8) untereinander unmittelbar stromabwärts eines Spritzkopfes (1) für eine Folie, beispielsweise eine PVC-Folie, durchgeführt wird, wobei der Abstand zwischen dem Austritt des Spritzkopfes (1) und der Kontaktlinie zwischen den Walzen des Kalanders (3) gering, etwa im Bereich einiger Zentimeter, ist.

3. Verfahren nach einem der Ansprüche 1 oder 2, dadurch gekennzeichnet, daß die Folie (2), die die Beschichtung bildet, eine transparente Folie ist.

4. Verfahren nach Anspruch 1 oder 2, dadurch gekennzeichnet, daß die Folie (2), die die Beschichtung bildet, eine Folie aus einer farbigen Substanz ist.

5. Verfahren nach einem der Ansprüche 1 bis 4, dadurch gekennzeichnet, daß die abgewandte Seite des Trägermaterials (7) ihr Aussehen und ihre textile Griffigkeit beibehält, wobei die Beschichtung (2) lediglich teilweise in die Stärke des Trägermaterials (7) eindringt.

6. Verfahren nach einem der Ansprüche 2 bis 5, dadurch gekennzeichnet, daß das Trägermaterial (7) eine Strickware ist.

7. Verfahren nach einem der Ansprüche 2 bis 5, dadurch gekennzeichnet, daß das Trägermaterial (7) eine Webware ist.

FIG.1

FIG.2

1